# DEMANDE DE BREVET EUROPEEN

(11) **EP 1 372 295 A1**
(43) Date de publication de la demande: **17.12.2003**
(21) Numéro de dépôt: 03291224.8
(22) Date de dépôt: 23.05.2003
(51) Int. Cl.: H04L 12/24

(54) **Dispositif et procédé de contrôle de profils, notamment de flux de données, dans un réseau de communications**

(30) Priorité: 03.06.2002 FR 0206791
(71) Demandeur: ALCATEL, 75008 Paris (FR)
(72) Inventeur: Marilly, Emmanuel, 92160 Antony (FR); Betge-Brezetz, Stéphane, 75015 Paris (FR); Martinot, Olivier, 91210 Draveil (FR); Delegue, Gérard, 94230 Cachan (FR)
(74) Mandataire: Chaffraix, Sylvain

(57) **Abrégé**

Un dispositif, de contrôle de données primaires au sein d'un réseau de communications équipé de moyens de mesures (2) délivrant des informations primaires représentatives de données primaires, comprend une mémoire (4) dans laquelle sont stockées des données secondaires définissant des modèles représentatifs d'informations primaires, ainsi que des moyens de contrôle (3) agencés pour comparer les informations primaires délivrées à l'un au moins des modèles, de manière à délivrer un message représentatif d'un niveau de corrélation entre ces informations primaires et le modèle choisi.

## Description

L'invention concerne le domaine des communications entre terminaux au sein d'un réseau, et plus particulièrement celui du contrôle des données échangées par ces terminaux.

En raison de l'accroissement permanent des données échangées dans les réseaux de communications et du nombre et de la variété des services offerts aux clients qui utilisent les réseaux et leurs équipements, le nombre de données mesurables et le nombre de mesures nécessaires à la gestion du trafic et à la gestion des niveaux de service ne cesse d'augmenter. Le gestionnaire du réseau, qui est chargé de résoudre les problèmes de trafic et de fournir des rapports destinés à l'opérateur et à ses clients, doit donc analyser de plus en plus d'informations (primaires) concernant les données échangées.

Ce problème est encore accru lorsque l'opérateur du réseau passe avec ses clients des accords de niveau de service (ou SLA pour « Service Level Agreement ») qui incluent des parties techniques définies par des spécifications de niveau de service (ou SLS pour « Service Level Spécification »).

Quelques outils ont été proposés pour faciliter cette analyse, comme par exemple Proviso de la société Quallaby, ou Infovista. Mais, ces outils n'effectuent généralement que des analyses assez simples, comme par exemple
- la surveillance de la bande passante utilisée (une alarme étant délivrée en cas de franchissement d'un seuil limite). Un exemple d'un tel état de l'art est par exemple décrit dans la demande de brevet européenne EP1065827.
- ou la comparaison sur ordre d'une courbe moyenne portant sur d'anciennes informations (primaires) à une courbe moyenne portant sur de nouvelles informations (primaires).

Les analyses plus sophistiquées nécessitent presque toujours l'intervention du gestionnaire. C'est notamment le cas du suivi de l'évolution des courbes de trafic journalières, hebdomadaires ou mensuelles, indispensables à la gestion du réseau, et notamment à l'anticipation des surcharges de trafic.

Il n'existe donc pas, aujourd'hui, d'outil de contrôle permettant d'analyser de façon automatisée les informations (primaires) concernant les données (primaires) échangées entre terminaux, qu'il s'agisse d'informations de trafic ou d'informations de service, telles que les niveaux de service ou les indicateurs de niveau de service.

L'invention a donc pour but de remédier à l'inconvénient précité.

Elle propose à cet effet un dispositif de contrôle de données primaires au sein d'un réseau de communications équipé de moyens de mesures délivrant des informations primaires représentatives de données primaires, comme par exemple la bande passante utilisée.

Ce dispositif se caractérise par le fait qu'il comporte, d'une part, une mémoire (ou base de données) dans laquelle sont stockées des données secondaires qui définissent des modèles représentatifs d'informations primaires, et d'autre part, des moyens de contrôle agencés pour comparer les informations primaires délivrées par les moyens de mesure à l'un au moins des modèles de manière à délivrer un message représentatif d'un niveau de corrélation (ou d'identification) entre ces informations primaires et le modèle choisi.

On entend ici par « niveau de corrélation (ou d'identification) », aussi bien une relation (ou similitude) étroite qu'une absence de relation (ou similitude). Par ailleurs, on entend ici par « modèle» une courbe ou un profil n-dimensionnel, n étant au moins égal à 1. En outre, le mot « modèle » doit ici être pris dans le sens « automatique », c'est-à-dire d'une équation ou d'une méthode permettant de prédire ou décrire le comportement d'un système (identification). Une courbe constitue le modèle le plus simple car elle comporte un ensemble de points (sans détermination d'un modèle mathématique). Par conséquent, on peut utiliser une description mathématique pour décrire un modèle.

Préférentiellement, la mémoire stocke des modèles représentatifs de l'évolution de flux (ou de comportements) de données primaires, comme par exemple des courbes ou profils de trafic (ou de bande passante utilisée), sur des fenêtres temporelles choisies (comme par exemple une heure donnée d'une journée, une journée donnée d'une semaine, une semaine donnée d'un mois, ou encore un mois donné d'une année). De nombreuses autres mesures réseaux peuvent être prises en compte, comme par exemple les pertes de paquets, les retards entre paquets, la gigue ou la stabilité, la bande passante, la stabilité de la bande passante. Mais, on peut également prendre en compte d'autres types de paramètres, comme par exemple ceux provenant de formules définissant par exemple la stabilité de la bande passante ou l'évolution de cette stabilité, ou la fiabilité ou encore la directionnalité d'une communication, ou analogue. On peut également utiliser des paramètres extrapolés, comme par exemple des tendances de paramètres.

Dans un mode de réalisation avantageux, le dispositif peut comporter, d'une part, des moyens de traitement destinés à recevoir les informations primaires et à les stocker dans la mémoire, au fur et à mesure de leur arrivée, en correspondance de fenêtres temporelles choisies, et à comparer les informations primaires délivrées, associées à une fenêtre temporelle choisie, à certaines au moins des informations primaires stockées, associées à cette fenêtre temporelle choisie, de manière à déterminer une éventuelle invariance entre les informations primaires délivrées et stockées, et d'autre part, des moyens de modélisation capables, en cas de détection d'une invariance, de générer un modèle représentatif des informations délivrées et de le stocker dans la mémoire. On génère ainsi automatiquement de nouveaux modèles à l'aide de l'historique des informations primaires reçues.

On entend ici par « invariance », un comportement qui se répète de façon sensiblement constante ou invariante en présence de conditions sensiblement identiques.

Dans ce cas, les moyens de traitement sont préférentiellement agencés pour extraire de la mémoire certaines informations primaires stockées, associées à une même fenêtre temporelle choisie, puis pour générer des informations secondaires représentatives de ces informations primaires moyennées, et pour déterminer l'éventuelle invariance en fonction d'au moins ces informations secondaires. Par exemple, on génère des informations secondaires définissant une courbe de mesures moyennes à partir des courbes de mesures précédemment reçues.

En variante ou en complément, les moyens de traitement peuvent être agencés, d'une part, pour déterminer des informations tertiaires représentatives des distributions des valeurs de certaines informations secondaires (par exemple une variance), et pour comparer ces informations tertiaires à des premiers seuils, de manière à déterminer l'éventuelle invariance des informations primaires délivrées et stockées. Mais, l'invariance peut être estimées par d'autres moyens, comme par exemple par le calcul d'une distance statistique.

Par ailleurs, les modèles peuvent être générés de différentes manières. Une solution peut consister à les définir à partir de l'intégralité des informations secondaires (toutes les informations secondaires définissant le modèle sont alors stockées dans la mémoire sous forme de données secondaires). Une autre solution consiste à les définir à partir d'un traitement mathématique (comme par exemple une régression polynomiale) appliqué aux informations secondaires (seuls les paramètres représentatifs du résultat du traitement mathématique, et définissant le modèle, étant alors stockés dans la mémoire sous forme de données secondaires).

Afin de ne pas surcharger la mémoire, les moyens de modélisation peuvent comparer chaque nouveau modèle généré aux modèles stockés pour ne stocker que les modèles réellement différents des anciens.

Les modèles ne sont pas forcément générés par le dispositif selon l'invention. Certains, voire tous, peuvent en effet être fournis par un opérateur, via une interface. Ils peuvent également être associés à une information auxiliaire, par exemple destinée à constituer une partie au moins du message délivré.

Les moyens de contrôle peuvent être agencés pour extraire de la mémoire soit automatiquement, par exemple par reconnaissance du type des informations primaires reçues, soit sur ordre, par exemple du gestionnaire, l'un au moins des modèles, puis pour déterminer l'écart entre l'une au moins des valeurs définissant les informations primaires et la valeur correspondante associée au modèle extrait, et enfin pour délivrer un message représentatif de l'écart ainsi déterminé. Dans ce cas, les moyens de contrôle peuvent être agencés pour « constituer » des première et seconde courbes (ou profils) à partir des informations primaires et des modèles, et pour déterminer la surface (ou l'aire) comprise entre ces première et seconde courbes, de manière à délivrer un message représentatif de la valeur de la surface, après une éventuelle comparaison avec un seuil.

En variante ou en complément, les moyens de contrôle peuvent être agencés pour déterminer si certaines au moins des informations primaires délivrées présentent une valeur contenue dans un intervalle associé à la valeur du point correspondant du modèle, et pour délivrer un message représentatif de l'appartenance, ou non, desdites valeurs d'informations primaires auxdits intervalles.

Enfin, les moyens de contrôle peuvent être également agencés pour effectuer des prédictions d'évolution d'informations primaires par une analyse des variations d'écart(s) (ou de surface) entre les informations primaires, précédemment reçues et traitées, et un modèle choisi.

Le dispositif selon l'invention peut également comporter la mémoire (ou base de données) contenant les modèles et/ou les anciennes informations primaires.

L'invention porte également sur un procédé de contrôle de données primaires au sein d'un réseau de communications, consistant à stocker dans une mémoire des données secondaires qui définissent des modèles représentatifs d'informations primaires, et à comparer des informations primaires, représentatives de données primaires, à l'un au moins des modèles, de manière à délivrer un message représentatif d'un niveau de corrélation entre ces informations primaires et le modèle choisi.

Le procédé selon l'invention pourra comporter de nombreuses caractéristiques complémentaires qui pourront être prises séparément et/ou en combinaison, et en particulier :
- les modèles peuvent être représentatifs d'évolutions de flux de données primaires sur des fenêtres temporelles choisies ;
- on peut stocker dans la mémoire les informations primaires délivrées en correspondance de fenêtres temporelles choisies, puis comparer les informations primaires délivrées, associées à une fenêtre temporelle choisie, à certaines au moins des informations primaires stockées, associées à cette fenêtre temporelle choisie, de manière à déterminer une éventuelle invariance entre les informations primaires délivrées et stockées, et, en cas de détection d'une invariance, générer un modèle représentatif des informations primaires et stocker ce modèle dans la mémoire. Dans ce cas, on peut extraire de la mémoire certaines informations primaires stockées, associées à une même fenêtre temporelle choisie, puis générer des informations secondaires représentatives de ces informations primaires moyennées, et déterminer l'éventuelle invariance en fonction d'au moins ces informations secondaires. On peut alors déterminer des informations tertiaires représentatives des distributions des valeurs de certaines informations secondaires (par exemple une variance), et comparer ces informations tertiaires à des premiers seuils, de manière à déterminer l'éventuelle invariance des informations primaires délivrées et stockées ;
- certains au moins des modèles générés peuvent être définis à partir de l'intégralité des informations secondaires correspondantes, les informations primaires définissant le modèle étant alors stockées dans la mémoire. En variante, on peut générer certains au moins des modèles à partir d'un traitement mathématique appliqué aux informations secondaires correspondantes, les paramètres représentatifs du résultat du traitement mathématique, qui définissent le modèle, étant alors stockés dans la mémoire ;
- on peut comparer chaque nouveau modèle généré aux modèles stockés, de manière à ne stocker un nouveau modèle que lorsqu'il est différent des modèles déjà stockés ;
- certains modèles peuvent être fournis par un opérateur ;
- certains modèles peuvent être associés à une information auxiliaire destinée à constituer une partie au moins du message délivré ;
- à réception d'informations primaires, on peut extraire de la mémoire au moins un modèle choisi, automatiquement ou sur ordre, puis déterminer l'écart entre l'une au moins des valeurs définissant les informations primaires et la valeur correspondante associée au modèle extrait, et délivrer un message représentatif de l'écart. Dans ce cas, on peut « constituer » des première et seconde courbes à partir des informations primaires et des modèles, et déterminer la surface comprise entre ces première et seconde courbes, de manière à délivrer un message représentatif de la valeur de la surface ;
- on peut déterminer si certaines au moins des informations primaires délivrées présentent une valeur contenue dans un intervalle associé à la valeur d'un point correspondant du modèle, puis délivrer un message représentatif de l'appartenance, ou non, desdites valeurs d'informations primaires auxdits intervalles ;
- on peut déterminer une variation d'écart(s) ou de surface entre des informations primaires espacées dans le temps et un modèle choisi, et déduire de cette variation de futures informations primaires.

L'invention peut être mise en oeuvre dans tout type de réseau de communications, privé ou public, et en particulier dans les réseaux Internet (IP), ATM et Frame Relay. Par ailleurs, l'invention peut permettre le contrôle de nombreux services, et en particulier IP VPN, le haut débit, les services « web », le multimédia et 3G.

D'autres caractéristiques et avantages de l'invention apparaîtront à l'examen de la description détaillée ci-après, et des dessins annexés, sur lesquels :
- la figure 1 illustre de façon schématique un exemple de réalisation d'un dispositif selon l'invention,
- la figure 2 est un diagramme comparatif illustrant la phase d'identification d'un profil de bande passante utilisée (IP) à un modèle (MP),
- la figure 3 est un diagramme illustrant des profils de bandes passantes utilisées (BP) correspondant à des semaines successives (Wi),
- la figure 4 est un diagramme illustrant le profil hebdomadaire moyen résultant des profils hebdomadaires de bande passante de la figure 3, en fonction des jours de la semaine, ainsi que les variances (V) associées à des points caractéristiques de ce profil moyen,
- la figure 5 est un diagramme illustrant un premier profil de bande passante utilisée, en fonction des jours de la semaine ; ce profil constituant un invariant apte à définir un modèle,
- la figure 6 est un diagramme illustrant un second profil de bande passante mesurée, en fonction des jours de la semaine ; ce profil ne constituant pas un invariant apte à définir un modèle.

Ces dessins sont, pour l'essentiel, de caractère certain. En conséquence, ils pourront non seulement servir à compléter l'invention, mais aussi contribuer à sa définition, le cas échéant.

Le dispositif selon l'invention est destiné à être installé au coeur d'un réseau de communications de manière à contrôler les données, dites primaires, que s'échangent des terminaux, notamment de clients, raccordés audit réseau. A titre d'exemple non limitatif, on considère dans ce qui suit que le réseau est le réseau public Internet dans lequel les données sont échangées selon le protocole IP. Mais, il pourrait s'agir d'un réseau privé, de type Intranet, ou de plusieurs réseaux public(s) et/ou privé(s) raccordés les uns aux autres. Par ailleurs, on considère dans ce qui suit que certains au moins des clients du réseau sont liés à l'opérateur par des accords de niveau de service (ou SLA) qui incluent des parties techniques définies par des spécifications de niveau de service (ou SLS).

Préférentiellement, le dispositif 1 est implanté dans un serveur (non représenté) contrôlé par l'opérateur du réseau, et plus précisément par le gestionnaire de ce réseau.

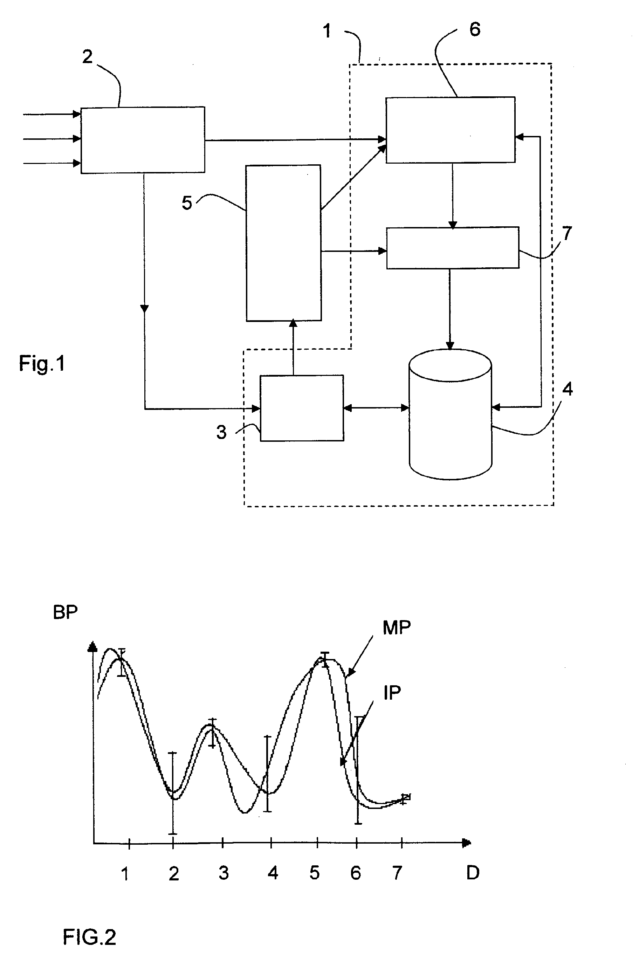

Le dispositif 1 illustré sur la figure 1 est alimenté en informations primaires, représentatives des données primaires échangées par les différents terminaux et équipements du réseau. On entend ici par « informations primaires », des données d'information, telles que des données de service, délivrées par des modules effectuant des mesures de tout type sur les données primaires, par exemple des mesures de bande passante utilisée ou des mesures de flux, des mesures de pertes de paquets, des mesures de retards entre paquets, des mesures de gigue ou de stabilité, des mesures de stabilité de la bande passante. Certaines de ces mesures sont donc représentatives des performances du réseau, ou d'une partie au moins de celui-ci. Mais, on peut également prendre en compte d'autres types de paramètres, comme par exemple ceux provenant de formules définissant par exemple la stabilité de la bande passante ou l'évolution de cette stabilité, ou la fiabilité ou encore la directionnalité d'une communication, ou analogue. On peut également utiliser des paramètres extrapolés, comme par exemple des tendances de paramètres. Encore d'autres informations primaires peuvent être prises en compte, comme par exemple des alarmes émises par des équipements du réseau tels que les routeurs et les interfaces. D'une manière générale, on peut prendre en compte toutes les données remontant du réseau, ainsi que celles déterminées ou extrapolées par le calcul. Par ailleurs, ces informations primaires peuvent être représentatives soit de mesures effectuées « en direct » (ou de façon quasi-instantanée), soit de mesures prédictives, comme par exemple l'estimation de l'évolution future de la charge du réseau compte tenu des mesures de charge antérieures.

Dans l'exemple illustré, un unique module de mesure 2 matérialise tous les modules et équipements susceptibles de délivrer des informations primaires utiles au dispositif 1.

Ce dispositif 1 comporte tout d'abord un module de contrôle 3 alimenté en informations primaires par le module de mesure 2 et couplé à une mémoire 4 dans laquelle sont stockées des données secondaires qui définissent des modèles représentatifs d'informations primaires.

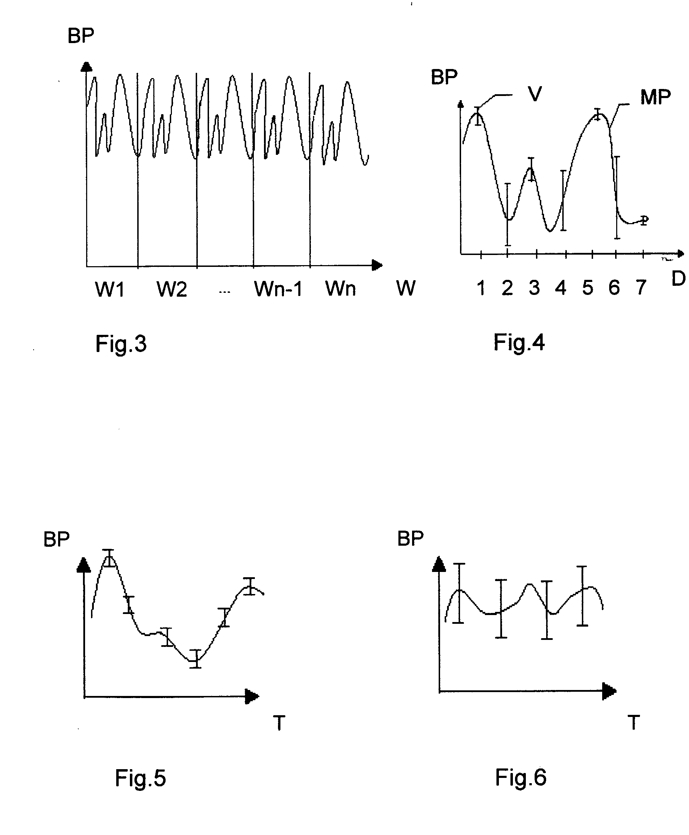

Un modèle est par exemple représenté par une courbe ou un profil MP du type de celui illustré sur la figure 6. Il définit par exemple l'évolution typique (habituelle) d'un paramètre du réseau, tel que la bande passante utilisée BP, ou de données de service, sur un intervalle de temps choisi et/ou sur une période choisie, comme par exemple une journée, une semaine, un mois ou un trimestre. L'exemple de la figure 6 illustre l'évolution typique de la bande passante utilisée, jour (D) après jour, sur une période d'une semaine (W). Comme on le verra plus loin, un modèle MP du type de celui illustré est généralement associé à quelques valeurs statistiques représentatives de la dispersion typique de la valeur mesurée associée. Cette valeur statistique est par exemple la variance V.

Le module de contrôle 3 est destiné à comparer, en temps réel, les informations primaires qu'il reçoit à l'un au moins des modèles stockés (en fait celui qui correspond à leur type) pour informer le gestionnaire du réseau d'un fonctionnement normal ou anormal. Plus précisément, lorsque le module de contrôle 3 reçoit des informations primaires, il en détermine le type, ainsi qu'éventuellement la fenêtre temporelle associée, puis il extrait de la mémoire 4 le modèle qui correspond à ce type. Bien entendu, on peut également envisager que l'extraction d'un modèle résulte d'un ordre adressé, par exemple, par le gestionnaire du réseau et désignant ledit modèle.

Lorsque les informations primaires sont sensiblement identiques au modèle qui leur correspond, alors le module de contrôle considère qu'il y a identification entre ledit modèle et lesdites informations primaires, ou en d'autres termes que le fonctionnement des équipements ou services concernés par lesdites informations primaires est normal (ou habituel). Il délivre alors un message indiquant qu'il y a eu identification.

En revanche, lorsque les informations primaires diffèrent notablement du modèle qui leur correspond et auquel elles sont confrontées, alors le module de contrôle 3 considère qu'il n'y a pas identification entre ledit modèle et lesdites informations primaires, ou en d'autres termes que le fonctionnement des équipements ou services concernés par lesdites informations primaires est anormal (ou inhabituel). Il délivre alors un message (d'alarme) indiquant qu'il n'y a pas eu identification.

Les messages délivrés sont donc représentatifs du niveau de corrélation (ou d'identification) entre les informations primaires reçues et les données secondaires qui définissent le modèle stocké qui leur correspond.

De nombreuses techniques peuvent être envisagées pour décider de l'identification ou de la non identification. Comme illustré sur la figure 2, il s'agit en fait de comparer deux courbes ou profils, par exemple, l'une (MP) représentative d'un modèle, l'autre (IP) représentative d'informations primaires reçues. Bien entendu, la représentation graphique sous forme de courbes n'est donnée que pour faciliter la compréhension du traitement effectué. Dans la pratique, ce sont des fichiers de valeurs qui sont comparés.

Une première méthode peut consister à calculer pour un certain nombre de points représentatifs des informations primaires, voire tous, si leur valeur est contenue dans un intervalle associé à la valeur du point correspondant du modèle. Cet intervalle, qui est délimité par des seuils (supérieur et inférieur), peut être avantageusement défini par la variance V, lorsque celle-ci est attachée au modèle stocké. Si un point, représentant des informations primaires, est contenu dans l'intervalle correspondant, alors il y a identification locale. Dans le cas contraire (« franchissement de seuil »), il n'y a pas identification locale. L'identification globale au modèle de l'ensemble des points représentatifs des informations primaires reçues peut être acceptée par le module de contrôle 3 soit lorsque tous les points ont fait l'objet d'une identification locale, soit lorsqu'un nombre limité de points (choisi par exemple égal à 2 ou 3) n'a pas fait l'objet d'une identification locale.

Une seconde méthode peut consister à calculer la surface (ou l'aire) comprise entre les courbes représentatives respectivement des informations primaires délivrées et du modèle correspondant, puis à déterminer si cette surface est comprise dans un intervalle délimité par des seuils (supérieur et inférieur) et attaché au modèle stocké. Si la valeur de la surface est contenue dans l'intervalle correspondant, alors il y a identification globale. Dans le cas contraire (« franchissement de seuil »), il n'y a pas identification globale.

Bien entendu, d'autres techniques de comparaison (ou d'identification) peuvent être envisagées, comme par exemple le calcul de la distance statistique. On peut également envisager de combiner plusieurs techniques, notamment pour renforcer la précision ou la fiabilité de l'identification.

Préférentiellement, les messages sont communiqués par le module de contrôle 3 à une interface graphique 5 du serveur, par exemple de type GUI (pour « Graphic Interface User »). Ces messages peuvent être accompagnés d'un diagramme d'identification du type de celui illustré sur la figure 2, notamment lorsqu'il n'y a pas eu identification globale, et/ou de données d'informations auxiliaires préalablement associées au modèle, par exemple par le gestionnaire du réseau. Les données auxiliaires correspondent, par exemple, à un texte identifiant un profil reconnu. Dans ce cas, le gestionnaire du réseau associe le message qui lui semble le plus approprié. Ces messages peuvent être par exemple : « Journée du lundi classique reconnue », « Journée du lundi de Pentecôte reconnue », « Semaine classique reconnue » (par exemple dans le cas de cinq jours de travail consécutifs avec une répartition de charge caractéristique normale), « Semaine avec jour férié reconnu », « Mois classique non reconnu », « Mois avec vacances reconnu », « Profil correspondant à une saturation reconnue », etc...

Le module de contrôle 3 peut être également agencé de manière à effectuer des prédictions d'évolution d'informations primaires par une analyse des évolutions (ou variations) des différences d'écart(s) ou de surface entre les informations primaires, successivement reçues et analysées, et le modèle correspondant. Dans ce cas, le module de contrôle 3 délivre à l'interface graphique 5 un message représentatif de l'évolution (ou tendance) prédite, de sorte que le gestionnaire puisse disposer d'analyses par identification, correspondant à des informations primaires qui pourraient être ultérieurement indisponibles ou non mesurables. Cela peut également permettre d'anticiper un éventuel problème.

En outre, le module de contrôle 3 peut être agencé de manière à comparer des informations primaires reçues à plusieurs modèles différents associés à des situations différentes, comme'par exemple des périodes de travail ou des périodes de vacances. On peut en effet envisager qu'en l'absence d'identification à un premier modèle, le module de contrôle 3 extrait un second modèle et tente une seconde identification. Si aucun modèle ne correspond aux informations primaires reçues, le message généré le signale au gestionnaire, lequel devra alors rechercher la cause de l'anomalie de fonctionnement détectée. En revanche, si l'un des modèles correspond aux informations primaires reçues, le message généré peut directement indiquer au gestionnaire la cause de l'anomalie de fonctionnement détectée.

Le dispositif selon l'invention comporte également, de préférence, un module de traitement 6 couplé à un module de modélisation 7.

Le module de traitement 6 est tout d'abord destiné à recevoir les informations primaires délivrées par le module de mesure 2 et à les stocker dans la mémoire 4, au fur et à mesure de leur arrivée, de préférence en correspondance de fenêtres temporelles choisies. Ce fenêtrage peut porter sur des durées de l'ordre de la minute, de l'heure, de la journée, de la semaine, du mois, du trimestre, ou encore de l'année, selon les besoins du gestionnaire du réseau.

Une fois les informations primaires associées à une fenêtre temporelle, le module de traitement 6 peut les comparer, de préférence en temps réel, à certaines au moins des informations primaires précédemment stockées dans la mémoire 4, en référence à cette même fenêtre temporelle, de manière à détecter une éventuelle invariance (ou similitude) de comportement des informations primaires délivrées et stockées, d'un même type. Il s'agit en fait de déterminer si toutes ces informations primaires d'un même type, et associées à une même fenêtre temporelle, peuvent définir un modèle type de fonctionnement normal (ou habituel), ou en d'autres de déterminer si elles sont sensiblement invariantes.

Par exemple, le module de traitement 6 doit vérifier si le profil de la bande passante BP utilisée par un LSP (pour « Label Switch Path ») est invariant chaque semaine, ou en d'autres termes si ce profil est sensiblement le même d'une semaine à l'autre.

De nombreuses méthodes peuvent être envisagées pour déterminer un éventuel invariant. Une méthode peut consister à extraire de la mémoire 4 les informations primaires stockées, associées à des fenêtres temporelles identiques, mais successives. Par exemple, comme illustré sur la figure 3, à réception d'un profil hebdomadaire de bande passante utilisée BP, le module de traitement 6 extrait les profils hebdomadaires de la bande passante utilisée BP des 49 semaines précédentes (W1 à W(n-1), n étant ici égal à 50). Puis, il effectue la moyenne de ces cinquante profils, ce qui fournit des informations secondaires définissant un profil moyen associé à la fenêtre temporelle choisie (ici une semaine), comme illustré sur la figure 4.

De préférence, le module de traitement 6 détermine ensuite, à partir des informations secondaires qui définissent le profil moyen MP, des informations tertiaires représentatives des distributions des valeurs de certains points particuliers du profil moyen IP. Ces informations tertiaires peuvent être par exemple des variances V associées chacune à une mesure journalière choisie (par exemple à midi), comme illustré sur les figures 4 à 6. On compare ensuite la variance V (ou distribution) des points choisis du profil IP à un ou plusieurs seuils choisis. En variante, on peut comparer la somme des variances à un seuil choisi.

Si un nombre choisi de variances (ou la somme des variances) est inférieur(e) au seuil, alors le module de traitement 6 considère que le profil moyen IP est invariant. Ce nombre choisi peut être égal au nombre total de variances calculées, ou au nombre total moins une ou deux variances, par exemple. Cette première situation (d'invariance) est illustrée sur la figure 5. En revanche, si un nombre choisi de variances (ou la somme des variances) est supérieur(e) au seuil, alors le module de traitement 6 considère que le profil moyen IP n'est pas invariant. Ce nombre choisi peut être égal à un ou deux, par exemple. Cette seconde situation (de non invariance) est illustrée sur la figure 6.

Le module de modélisation 7 est destiné, en cas de détection d'une invariance par le module de traitement 6, à générer un modèle MP représentatif des informations primaires ou secondaires et à le stocker dans la mémoire 4.

De nombreuses techniques peuvent être envisagées pour la génération des modèles. Une première technique peut consister à définir un modèle MP à partir de l'ensemble des informations secondaires définissant, par exemple, un profil moyen IP. Dans ce cas, toutes les informations secondaires déterminées par le module de traitement 6 sont stockées sous forme de données secondaires dans la mémoire 4.

Une seconde technique peut consister à définir un modèle MP à partir d'un traitement mathématique, tel qu'une régression polynomiale, appliqué aux informations secondaires déterminées par le module de traitement 6. Dans ce cas, on stocke dans la mémoire 4, sous forme de données secondaires, les paramètres représentatifs du résultat du traitement mathématique, lesquels définissent alors le modèle MP.

D'autres techniques de modélisation peuvent être envisagées, et notamment la technique paramétrique. Elle consiste à modéliser des courbes par des équations paramétriques et à stocker uniquement les paramètres des équations. D'une manière générale, toutes les techniques permettant la modélisation d'un profil (courbe), au sens défini précédemment, peuvent être utilisées.

Afin de ne pas surcharger la mémoire 4, il est préférable que le module de modélisation 7 compare chaque nouveau modèle MP généré aux modèles stockés avant de décider de son stockage. De la sorte, seuls sont stockés les modèles réellement différents des anciens modèles.

Il est important de noter que les modules de traitement 6 et de modélisation 7 ne sont que des éléments complémentaires du module de contrôle 3 du dispositif. On peut en effet envisager que tous les modèles MP soient fournis par le gestionnaire du réseau, par exemple via l'interface graphique 5. On peut également envisager une variante mixte dans laquelle une partie des modèles est générée par le dispositif et une autre partie est fournie par le gestionnaire du réseau, via l'interface graphique 5.

Par ailleurs, certains modèles peuvent être stockés dans la mémoire 4 accompagnés d'une information auxiliaire, du type de celles présentées ci-avant, et par exemple destinée à constituer une partie au moins du message délivré. Dans ce cas, lorsque le dispositif est agencé de manière à générer une partie au moins des modèles, le module de modélisation 7 ne procède au stockage d'un nouveau modèle qu'après avoir obtenu l'autorisation du gestionnaire du réseau, accompagnée d'une éventuelle information auxiliaire.

Les modules de contrôle 3, de traitement 6 et de modélisation 7 du dispositif peuvent être respectivement réalisés sous la forme de circuits électroniques, de modules logiciels (ou informatiques), ou d'une combinaison de circuits et de logiciels.

Par ailleurs, dans ce qui précède on a décrit un module de contrôle 3 qui était directement alimenté en informations primaires par le module de mesure 2. Mais, le module de contrôle 3 pourrait être alimenté en informations primaires par le module de traitement 6.

L'invention offre également un procédé de contrôle de données primaires au sein d'un réseau de communications, dans lequel on délivre des informations primaires représentatives de données primaires. Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituant le dispositif, seules seront résumées ci-après les étapes mettant en oeuvre les fonctions principales du procédé selon l'invention.

Ce procédé consiste à stocker dans une mémoire 4 des données secondaires qui définissent des modèles MP représentatifs d'informations primaires, et à comparer des informations primaires à l'un au moins des modèles, de manière à délivrer un message représentatif d'un niveau de corrélation (ou d'identification) entre ces informations primaires et le modèle choisi.

Le procédé peut également comporter une phase de génération de modèles à partir des informations primaires reçues. Cette phase consiste, par exemple, à stocker dans la mémoire 4 les informations primaires délivrées en correspondance de fenêtres temporelles choisies, puis à comparer les informations primaires délivrées, associées à une fenêtre temporelle choisie, à certaines au moins des informations primaires stockées, associées à cette fenêtre temporelle choisie, de manière à déterminer une éventuelle invariance entre les informations primaires délivrées et stockées, et, en cas de détection d'une invariance, à générer un modèle représentatif des informations primaires et à stocker ce modèle dans la mémoire.

Le procédé peut également comporter une phase dans laquelle on détermine les variations d'écart(s) et/ou de surface entre des informations primaires espacées dans le temps et un modèle choisi, de manière à déduire de cette variation de futures informations primaires.

Grâce à l'invention, il est désormais possible d'automatiser partiellement ou totalement, en direct et si besoin en permanence, la phase d'identification ou de corrélation des informations primaires à des modèles choisis, ainsi qu'éventuellement la phase de génération de modèles. Cela permet à l'opérateur du réseau de se concentrer sur la surveillance du réseau et notamment sur la résolution des problèmes qui surviennent dans ce réseau ou qui sont susceptibles de survenir.

De plus, cela permet de détecter des tendances par confrontation des informations primaires à plusieurs modèles différents associés à des situations différentes, comme par exemple des périodes de travail ou des périodes de vacances.

En outre, l'invention s'applique à une grande variété de réseaux d'échange de données, et notamment les réseaux IP, ATM et Frame Relay, ainsi qu'à de nombreux types de services, et notamment IP VPN, le haut débit (par exemple l'accès ADSL), les services « web », le multimédia et 3G.

L'invention peut être utilisée dans de nombreuses applications, comme par exemple la planification et la configuration d'un réseau, le contrôle des SLA (« Service Level Agreement ») / SLS (« Service Level Spécification »), ou le diagnostic. L'invention peut notamment permettre d'informer un opérateur qu'un LSP (« Label Switch Path ») est saturé ou sous utilisé, de sorte qu'il alloue plus ou moins de bande passante au LSP concerné. Elle peut également permettre d'informer un opérateur que son réseau a un fonctionnement anormal, par exemple du fait que le profil de la semaine courante ne correspond pas au profil type d'une semaine classique.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

## Revendications

1. Dispositif de contrôle de données primaires au sein d'un réseau de communications comprenant des moyens de mesures (2) propres à délivrer des informations primaires représentatives de données primaires, **caractérisé en ce qu'**il comporte une mémoire (4) dans laquelle sont stockées des données secondaires définissant des modèles représentatifs d'informations primaires, et des moyens de contrôle (3) agencés pour comparer lesdites informations primaires délivrées à l'un au moins desdits modèles de manière à délivrer un message représentatif d'un niveau de corrélation entre ces informations primaires et ledit modèle.

2. Dispositif selon la revendication 1, **caractérisé en ce que** ladite mémoire (4) stocke des modèles représentatifs d'évolutions de flux de données primaires sur des fenêtres temporelles choisies.

3. Dispositif selon l'une des revendications 1 et 2, **caractérisé en ce qu'**il comprend i) des moyens de traitement (6) agencés pour recevoir lesdites informations primaires et les stocker dans la mémoire (4) en correspondance de fenêtres temporelles choisies, et pour comparer lesdites informations primaires délivrées, associées à une fenêtre temporelle choisie, à certaines au moins desdites informations primaires stockées, associées à cette fenêtre temporelle choisie, de manière à déterminer une éventuelle invariance entre lesdites informations primaires délivrées et stockées, et ii) des moyens de modélisation (7) agencés, en cas de détermination d'une invariance, pour générer un modèle représentatif desdites informations primaires et stocker ledit modèle dans ladite mémoire (4).

4. Dispositif selon la revendication 3, **caractérisé en ce que** lesdits moyens de traitement (6) sont agencés pour extraire de ladite mémoire (4) certaines informations primaires stockées, associées à une même fenêtre temporelle choisie, puis pour générer des informations secondaires représentatives de ces informations primaires moyennées, et pour déterminer l'éventuelle invariance en fonction d'au moins lesdites informations secondaires.

5. Dispositif selon la revendication 4, **caractérisé en ce que** lesdits moyens de traitement (6) sont agencés pour déterminer des informations tertiaires représentatives des distributions' des valeurs de certaines informations secondaires, et pour comparer lesdites informations tertiaires à des premiers seuils, de manière à déterminer l'éventuelle invariance desdites informations primaires délivrées et stockées.

6. Dispositif selon l'une des revendications 4 et 5, **caractérisé en ce que** certains au moins des modèles générés sont définis à partir de l'intégralité des informations secondaires correspondantes, lesdites informations secondaires définissant ledit modèle étant alors stockées dans ladite mémoire (4).

7. Dispositif selon l'une des revendications 4 et 5, **caractérisé en ce que** lesdits moyens de modélisation (7) sont agencés pour générer certains au moins des modèles à partir d'un traitement mathématique appliqué auxdites informations secondaires correspondantes, les paramètres représentatifs du résultat dudit traitement mathématique, et définissant ledit modèle, étant alors stockés dans ladite mémoire (4).

8. Dispositif selon l'une des revendications 3 à 7, **caractérisé en ce que** lesdits moyens de modélisation (7) sont agencés pour comparer chaque nouveau modèle généré auxdits modèles stockés, de manière à ne stocker un nouveau modèle que lorsqu'il est différent des modèles déjà stockés.

9. Dispositif selon l'une des revendications 1 à 8, **caractérisé en ce que** ladite mémoire (4) est couplée à une interface utilisateur (5) de manière à être alimentée en modèles.

10. Dispositif selon l'une des revendications 1 à 9, **caractérisé en ce que** certains modèles sont associés à une information auxiliaire, destinée à constituer une partie au moins dudit message délivré.

11. Dispositif selon l'une des revendications 1 à 10, **caractérisé en ce que** lesdits moyens de contrôle (3) sont agencés pour i) extraire de ladite mémoire (4) un modèle choisi, ii) déterminer l'écart entre l'une au moins des valeurs définissant lesdites informations primaires et la valeur correspondante associée audit modèle extrait, et iii) délivrer un message représentatif dudit écart.

12. Dispositif selon l'une des revendications 1 à 10, **caractérisé en ce que** lesdits moyens de contrôle (3) sont agencés pour constituer des courbes à partir des informations primaires et des modèles, et pour déterminer la surface comprise entre une première courbe représentative d'informations primaires délivrées et une seconde courbe représentative d'un modèle extrait, de manière à délivrer un message représentatif de la valeur de ladite surface.

13. Dispositif selon l'une des revendications 11 et 12, **caractérisé en ce que** lesdits moyens de contrôle (3) sont agencés pour déterminer si certaines au moins des informations primaires délivrées présentent une valeur contenue dans un intervalle associé à la valeur d'un point correspondant du modèle, et pour délivrer un message représentatif de l'appartenance, ou non, desdites valeurs des informations primaires auxdits intervalles.

14. Dispositif selon l'une des revendications 11 à 13, **caractérisé en ce que** lesdits moyens de contrôle (3) sont agencés pour déterminer une variation d'écart(s) ou de surface entre des informations primaires espacées dans le temps et un modèle choisi, et déduire de cette variation de futures informations primaires.

15. Procédé de contrôle de données primaires au sein d'un réseau de communications, dans lequel on délivre des informations primaires représentatives de données primaires, **caractérisé en ce qu'**il consiste à stocker dans une mémoire (4) des données secondaires définissant des modèles représentatifs d'informations primaires, et à comparer lesdites informations primaires délivrées à l'un au moins desdits modèles de manière à délivrer un message représentatif d'un niveau de corrélation entre ces informations primaires et ledit modèle.

16. Procédé selon la revendication 15, **caractérisé en ce que** lesdits modèles sont représentatifs d'évolutions de flux de données primaires sur des fenêtres temporelles choisies.

17. Procédé selon l'une des revendications 15 et 16, **caractérisé en ce que** l'on stocke dans ladite mémoire (4) les informations primaires délivrées en correspondance de fenêtres temporelles choisies, puis on compare lesdites informations primaires délivrées, associées à une fenêtre temporelle choisie, à certaines au moins desdites informations primaires stockées, associées à cette fenêtre temporelle choisie, de manière à déterminer une éventuelle invariance entre lesdites informations primaires délivrées et stockées, et, en cas de détermination d'une invariance, on génère un modèle représentatif desdites informations primaires et on stocke ledit modèle dans ladite mémoire (4).

18. Procédé selon la revendication 17, **caractérisé en ce que** l'on extrait de la mémoire (4) certaines informations primaires stockées, associées à une même fenêtre temporelle choisie, puis on génère des informations secondaires représentatives de ces informations primaires moyennées, et on détermine l'éventuelle invariance en fonction d'au moins lesdites informations secondaires.

19. Procédé selon la revendication 18, **caractérisé en ce que** l'on détermine des informations tertiaires représentatives des distributions des valeurs de certaines informations secondaires, et on compare lesdites informations tertiaires à des premiers seuils, de manière à déterminer l'éventuelle invariance desdites informations primaires délivrées et stockées.

20. Procédé selon l'une des revendications 18 et 19, **caractérisé en ce que** certains au moins des modèles générés sont définis à partir de l'intégralité des informations secondaires correspondantes, lesdites informations secondaires définissant ledit modèle étant alors stockées dans ladite mémoire (4).

21. Procédé selon l'une des revendications 18 et 19, **caractérisé en ce que** l'on génère certains au moins des modèles à partir d'un traitement mathématique appliqué auxdites informations secondaires correspondantes, les paramètres représentatifs du résultat dudit traitement mathématique, et définissant ledit modèle, étant alors stockés dans ladite mémoire (4).

22. Procédé selon l'une des revendications 17 à 21, **caractérisé en ce que** l'on compare chaque nouveau modèle généré auxdits modèles stockés, de manière à ne stocker un nouveau modèle que lorsqu'il est différent des modèles déjà stockés.

23. Procédé selon l'une des revendications 17 à 24, **caractérisé en ce que** certains modèles sont fournis par un opérateur.

24. Procédé selon l'une des revendications 15 à 23, **caractérisé en ce que** certains modèles sont associés à une information auxiliaire, destinée à constituer une partie au moins dudit message délivré.

25. Procédé selon l'une des revendications 15 à 24, **caractérisé en ce qu'**à réception d'informations primaires on extrait de la mémoire (4) un modèle choisi, puis on détermine l'écart entre l'une au moins des valeurs définissant lesdites informations primaires et la valeur correspondante associée audit modèle extrait, et on délivre un message représentatif dudit écart.

26. Procédé selon l'une des revendications 15 à 25, **caractérisé en ce que** l'on constitue des courbes à partir des informations primaires et des modèles, et on détermine la surface comprise entre une première courbe représentative d'informations primaires délivrées et une seconde courbe représentative d'un modèle extrait, de manière à délivrer un message représentatif de la valeur de ladite surface.

27. Procédé selon l'une des revendications 15 à 26, **caractérisé en ce que** l'on détermine si certaines au moins des informations primaires délivrées présentent une valeur contenue dans un intervalle associé à la valeur d'un point correspondant du modèle, et on délivre un message représentatif de l'appartenance, ou non, desdites valeurs des informations primaires auxdits intervalles.

28. Procédé selon l'une des revendications 15 à 27, **caractérisé en ce que** l'on détermine une variation d'écart(s) ou de surface entre des informations primaires espacées dans le temps et un modèle choisi, et on déduit de cette variation de futures informations primaires.

29. Utilisation des procédés et dispositifs selon l'une des revendications précédentes dans les réseaux choisis parmi les réseaux publics et privés.

30. Utilisation selon la revendication 29, **caractérisée en ce que** le réseau est choisi dans un groupe comprenant les réseaux Internet (IP), ATM et Frame Relay.

31. Utilisation selon l'une des revendications 29 et 30, pour le contrôle de services choisis dans un groupe comprenant au moins IP VPN, le haut débit, les services « web », le multimédia et 3G.
